(19) Europäisches Patentamt

European Patent Office

Office européen des brevets

(11) Publication number: **0 300 979 B1**

## (12) EUROPEAN PATENT SPECIFICATION

(45) Date of publication of patent specification: **01.12.93**   (51) Int. Cl.⁵: **F02K 7/00**, F02C 3/16

(21) Application number: **88830269.2**

(22) Date of filing: **23.06.88**

(54) **Motor with turning ram jets.**

(30) Priority: **10.07.87 IT 4816387**

(43) Date of publication of application:
**25.01.89 Bulletin 89/04**

(45) Publication of the grant of the patent:
**01.12.93 Bulletin 93/48**

(84) Designated Contracting States:
**DE FR GB SE**

(56) References cited:
**DE-A- 3 144 347**
**GB-A- 2 045 870**
**GB-A- 2 165 310**
**US-A- 2 670 597**
**US-A- 3 200 588**

(73) Proprietor: **Cristaldi, Filippo**
**Via Giulio Galli, 14**
**I-00123 Roma(IT)**

(72) Inventor: **Cristaldi, Filippo**
**Via Giulio Galli, 14**
**I-00123 Roma(IT)**

EP 0 300 979 B1

## Description

The present invention relates to motor with turning ram jets and differs from known inner combustion motors because it has no cilinders and pistons in which the pressure of air and fuel mixture is created ( Otto and Diesel cycles or similar). It differs From known external combustion motors (Sabathe' cycle or similar ). It differs also from known flight motors (turboprops) because they require turbines to create the propelling power.

The present invention recalls flight motors called ram jets which must be moved at high speed to obtain at their interior an increase of air pressure where fuel can be injected, thus creating, if ignited, a reaction thrust.

The motor here presented uses the same principle where the ram jets are not linearly moved, but they turn around a shaft and being fixed at the periphery of a wheel.

When the wheel and jets are put in rapid rotation an icrease of air pressure is obtained. The injected fuel, subsequently ignited, creates a combustion of the mixture ( air + fuel ) and a peripheric reaction thrust.

Due to the fact that the thrust (F) is peripheric and distant (d) from the axis, the torque momentum that can be obtained is $Mt = F.d.n.$ (where n is the number of jets)
The air pressure is also obtained using one or more air compressor fixed to the same shaft or indipendent.

A motor whith turning ram jets fixed tangentially to the periphery of a wheel, having first ram jets that discharge gases into secondary ram jets,the wheel operating as a flier being mounted on a shaft is known from US-A-2 670 597.

The motor of the invention is as defined in the single claim. An example of such a motor is shown in the drawings wherein:

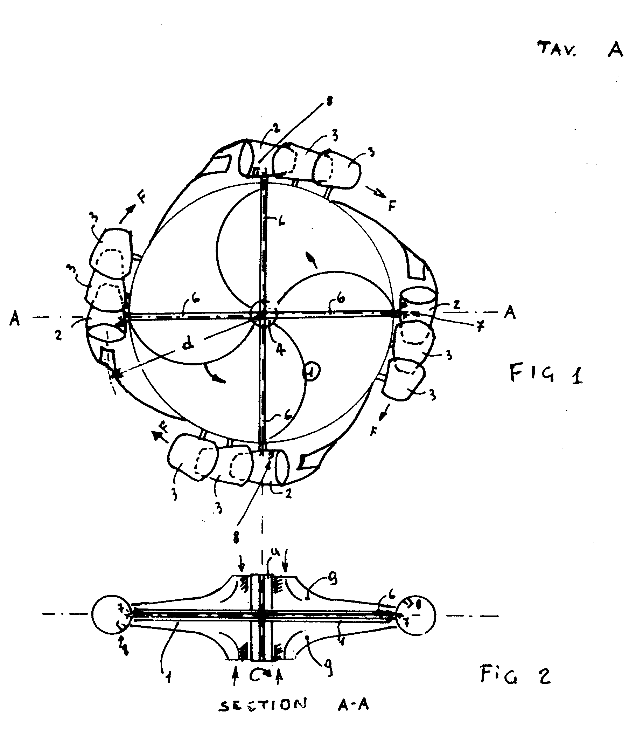

Figure 1 shows a top view of the motor;
Figure 2 shows a cross section of the notor of figure 1.

At the periphery of the wheel (1) are fixed the main jets(2) which discharge gases into the secondary jets (3), thus obtaining some recovery of energy.

The wheel (1) (can also be spoked ) is fixed to the shaft (4) and both are drilled (5) for fuel alimentation through sprayers (7) The drawings show also the spark plug (8) and the air compressor (9).

The motor can work as follows:
The shaft (4) the wheel (1) and the compressor (9) are put in rapid rotation by hand, by a motor or in any other way.

Due to the rotation air enters into the reactors and reaches higher pressure as the speed increases.

When the air pressure is high enough,fuel is injected and ignited by the spark plug (8) (or differently) and it produces a combustion accompanied by an increase of gas volume which in turn discharges generating a peripheric thrust.

Starting from this moment the motor works spontaneosely and provides machanical and/or electrical energy. The remaining heat can be used for cogeneration.

## Claims

1. Motor with turning ram jets (2-3) fixed tangentially to the periphery of a wheel (1) having first ram jets (2) that discharge gases into secondary ram jets (3) , the wheel (1) operating as a flier and comprising a centrifugal compressor (9) and being mounted on a shaft (4) , chacterised in that the compressor (9) is of the double entry type and the motor has no turbines and provides mechanical and/or electrical energy and the wheel(1) and the shaft (4) are drilled for fuel alimentation.

## Patentansprüche

1. Motor mit umlaufenden Zustansreaktoren (2-3), die an der Peripherie eines Rades (1) mit den Primärreaktoren (2) befestigt sind, die das Gas in die Sekundärreaktoren (3) auslassen; das Rad (1) arbeitet als Schwungrad und erhält einen Kreiselverdichter (9), der auf einer Welle (4) montiert ist und sich dadurch auszeichnet, daß der Verdichter (9) mit doppeltem Einlauf versehen ist und der Motor keine Turbinen besitzt und mechanische oder elektrische Energie produziert, wobei das Rad (1) und die Welle (4) mit Löchern für die Zuführung von Kraftsstoff versehen sind.

## Revendications

1. Moteur a'statoreacteurs rotatifs (2-3), fixes autour d'une roue (1) ayant des réacteurs: les premiers réacteurs (2) déchargeant le gaz dans les seconds (3); la roue (1) opérant comme volant; elle contient un compresseur centrifuge (9) monté sur un arbre (4) caractérisé par le fait que le compresseur (9) est du type double entrée et le moteur n'a pas de turbine. Il produit de l'énergie mécanique ou électrique, la roue (1) et l'arbre (4) étant percés afin de permettre l'alimentation du combustible.

TAV. A

FIG 1

Fig 2

SECTION A-A

3